# EUROPEAN PATENT APPLICATION

(11) **EP 1 256 485 A1**
(43) Date of publication of application: **13.11.2002**
(21) Application number: 02076775.2
(22) Date of filing: 08.05.2002
(51) Int. Cl.: B60P 1/43, B60P 1/16, B60P 3/06

(54) **A tipping trailer**

(30) Priority: 08.05.2001 GB 0111158
(71) Applicant: N.C. Agricultural Engineering Company Limited, County Armagh, BT61 9SF Northern Ireland (GB)
(72) Inventor: Nicholl, Norman, BT60 1VB County Armagh, Northern Ireland (GB); Carson, Wilfred, BT61 9NH County Armagh, Northern Ireland (GB)
(74) Representative: O'Connell, Maura, Dr.

(57) **Abstract**

The present invention relates to a tipping trailer for use in transporting and unloading materials, the trailer having a scow end from which the material is unloaded upon the tipping upwardly and rearwardly of a container of the trailer, the container having a front wall oppositely disposed to said scow end, which front wall is movable between a first position forming the wall, and a second position forming a ramp permitting access to the container.

## Description

The present invention relates to a tipping trailer, and in particular, a rear tipping dump trailer.

It is known for rear tipping trailers to have a container with fixed front and side walls, with material contained therein being dumped or discharged from the rear. Such conventional tipping trailers conventionally have a rear scow end which prevents accidental discharge of material stored therein, in addition to enabling stock piling of material within the container by increasing the rear height thereof. A scow end is essentially an open end which has an enlarged lip or edge extending upwardly from the base of the container. This lip will generally be sloped outwardly and upwardly away from the base of the container, such that when the trailer is tipped for unloading, no material is caught or collected at the end of the container by the lip. With the container lying flat in the storage/transport position, the scow end effectively closes the rear of the container in order to prevent material from being accidentally discharged therefrom, for example while the trailer is in transit.

However, in addition, this scow end prevents rear loading of wheeled or tracked equipment or the like, due to the physical height of lip at the rear of the trailer. It is not practical to have any form of ramp assembly associated with the scow end, which must be kept clear in order to permit the unloading of material therefrom. Even were some form of ramp assembly provided which was removably connectable to the scow end, a number of problems would still exist. The ramp assembly would have to be fitted to the trailer for loading, and then removed when transporting the trailer, resulting in a both difficult and time consuming exercise. In addition, the problem arises of storing the ramp assembly when not in use, in addition to the possibility of the ramp assembly, for one reason or another, becoming misplaced or separated from the trailer. This cause further problems and delays, particularly if a vehicle or the like is loaded in the container, and cannot therefore easily be removed therefrom. Furthermore, the scow end of the trailer is disposed as a relatively steep angle, and thus mounting a ramp to the upper edge thereof effectively results in the formation of a hump-backed ramp, having a sharp crest, which it will be appreciated is both difficult and dangerous to negotiate in a vehicle, particularly industrial vehicles which are generally inherently difficult to manoeuvre.

It is therefore an object of the present invention to provide a tipping trailer which is adapted to enable access thereto, for example by a vehicle or the like, while retaining the ability to be tilted upwardly to facilitate unloading from a rear scow end thereof.

It is a further object of the present invention to provide a tipping trailer in which the means adapted to enable access thereto may be disposed in a storage/transport position, on the trailer, when not in use.

Accordingly, the present invention provides a tipping trailer for transport by road or rail, the trailer comprising a base; a container having a floor and walls which define a storage area, the container being mounted to the base and pivotable relative thereto such as to enable unloading of the storage area from a rear end of the container; characterised in that at least a portion of one wall of the container is movable between a first position defining, with the other walls, the storage area, and a second position in which the at least a portion of the one wall forms a ramp facilitating access to the storage area.

Preferably, the ramp is pivotally mounted to the container.

Preferably, the ramp, when in the first position, forms a front wall of the container, oppositely disposed to the rear end.

Preferably, the length of the ramp may be altered.

Preferably, the ramp comprises a first section forming the at least a portion of the wall, and a second section hingedly mounted to the first section, such that when the ramp is in the first position, the first and second sections may be folded against one another, and when the ramp is in the second position, may be disposed substantially co-terminus and co-planar with one another to form the ramp.

Preferably, a loading drive means is provided which is operable to move the ramp between the first and second positions.

Preferably, the loading drive means is coupled to the second section and is operable to both extend and retract the second section relative to the first section, and to move the ramp between the first position and the second position.

Preferably, a latch is provided to releasably secure the ramp in the first position.

Preferably, a lock is provided to releasably secure the first section to the second section.

Preferably, the base may be lowered in order to further facilitate access to the storage area with the ramp in the second position.

Preferably, the rear end is a scow end.

The present invention will now be described with reference to the accompanying drawings, in which:-
Figure 1 is a side view of a trailer unit according to the present invention, coupled to a vehicle for transport;
Figure 2 is a side view of the trailer unit of Figure 1 in a tipping/unloading position;
Figure 3 is a side view of the trailer unit of Figure 1, in which a ramp has been partially uncoupled from a container of the trailer;
Figure 4 is an enlarged side view of the lock for holding first and second sections of the ramp in engagement with one another;
Figure 5 is a side view of the trailer unit of Figure 1, in which the second section of the ramp has been extended relative to the first section, by means of a loading drive means;
Figure 6 is an enlarged side view showing a latch mechanism for releasably securing the first section of the ramp to the container;
Figure 7 is a side view of the trailer unit of Figure 1, in which the first section and the second section of the ramp are located co-terminus and co-planar with one another, and have been pivoted away from the container such that the ramp provides access thereto;
Figure 8 is a side view of the trailer unit of Figure 1, in which a bottom chassis is urged towards the ground in order to reduce the relative angular disposition between the ramp and the container;
Figure 9 is a side view of the trailer unit of Figure 1, in which the bottom chassis is urged towards the ground by an alternative means, again with the same desired result;
Figure 10 illustrates a partial side view of a first alternative embodiment of the tipping trailer according to the present invention; and
Figure 11 illustrates a partial side view of a second alternative embodiment of the tipping trailer according to the present invention.

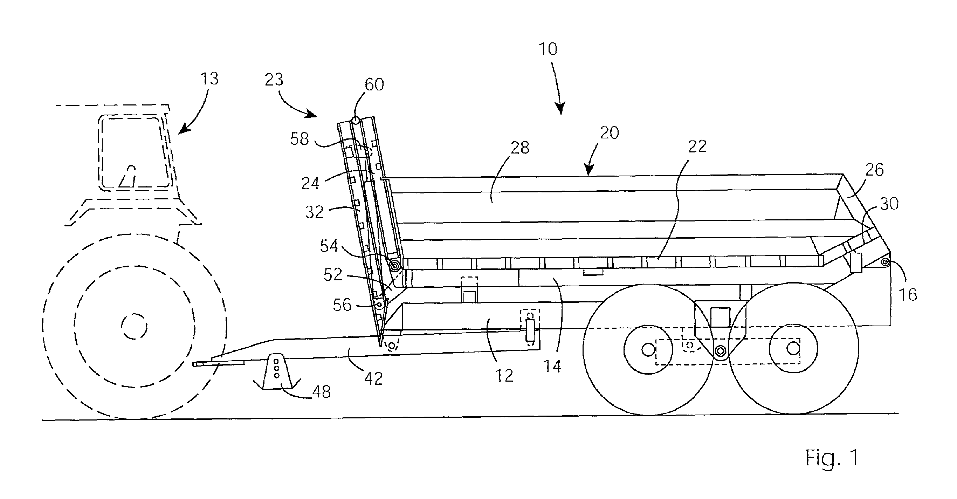

Referring now to Figures 1 to 9 of the accompanying drawings, there is illustrated a first embodiment of a trailer according to the present invention, generally indicated as 10, for particular use in transporting material such as clay, gravel, sand, etc, and for enabling ease of unloading of such material by tipping of the trailer 10 upwardly in order to allow the material to pour out of the trailer 10. The trailer 10 essentially comprises a base in the form of a bottom chassis 12 adapted for reversible engagement with a vehicle 13, preferably by means of a draw bar 42, and a top chassis 14 pivotably mounted at a tipping axis 16 with the bottom chassis 12. Secured to the top chassis 14 is a receptacle in the form of a container 20, into which, in use, materials are loaded for transport by the trailer 10. Although the trailer 10 is illustrated in a road going format, coupled to the road going vehicle 13, it will of course be appreciated that the trailer 10 could easily be adapted for transport, for example, by rail.

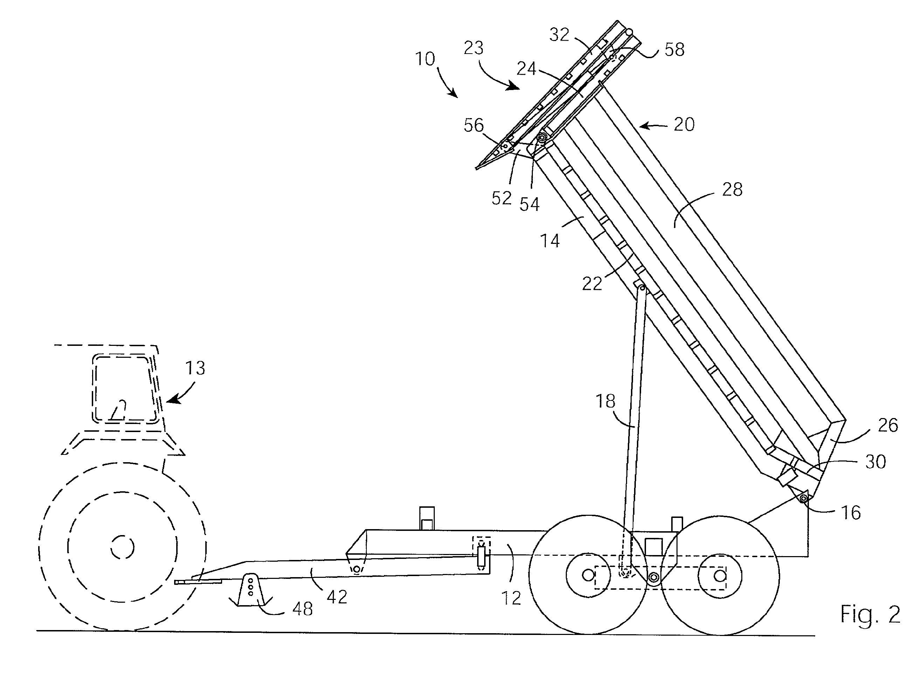

As can best be seen in Figure 2 of the accompanying drawings, the trailer 10 also includes tipping drive means in the form of a tipping ram 18 which is adapted and arranged to raise the top chassis 14 from a transport position as illustrated in Figure 1, in which the bottom chassis 12 is adjacent the top chassis 14, and a tipping position as illustrated in Figure 2, in which the top chassis 14 is at an angle with respect to the bottom chassis 12.

Although in the preferred embodiment illustrated the tipping ram 18 is employed to raise and lower the container 20, it will of course be understood that any other suitable means could be employed to effect this raising and lowering function. The use of the tipping ram 18, being powered by hydraulics, is generally preferred for such functions, as the tipping ram 18 can simply be powered from an existing hydraulic circuit (not shown) on board the vehicle 13.

The container 20, in the preferred embodiment illustrated, comprises a floor in the form of a base 22, a first lateral wall 28 and second lateral wall (not shown) oppositely disposed thereto, and a sloping scow end 30 extending therebetween at a rear of the container 20. Located directly above the scow end 30 is an open rear end 26 from which, in use, material is deposited when the container 20 is in the unloading position as illustrated in Figure 2. The base 22 is directly secured to the top chassis 14, which is primarily intended to provide structural rigidity to the trailer 10, and in particular to the container 20, as will be require when carrying and/or raising heavy loads. It will however be appreciated that the top chassis 14 and base 22 could be formed integrally with one another if desired.

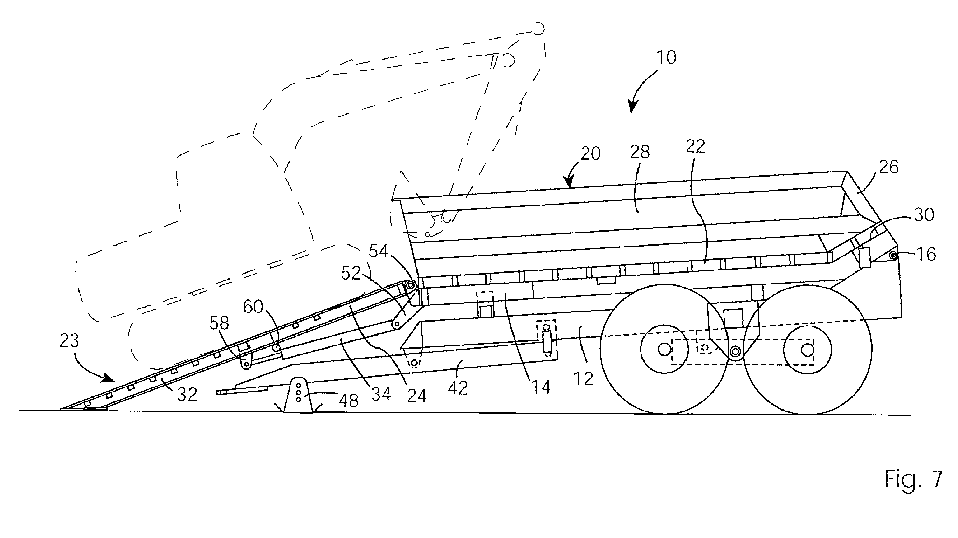

The trailer 10 is further provided with a ramp 23 formed from a first section in the form of a front wall 24 of the container 20, and a second section in the form of a ramp extension 32. In the preferred embodiment illustrated, the front wall 24 partially defines the ramp 23, although it will of course be understood that the first lateral wall 28 or the second lateral wall (not shown) may in addition, or alternatively, assume this role. However, the use of the front wall 24 allows any vehicle (for example as shown is dotted outline in Figure 7) being loaded or unloaded from the container 20 to utilise the full length of the base 22 of the container 20 to manoeuvre, thereby making the front wall 24 the preferred choice for forming part of the ramp 23 enabling access to the container 20.

In the preferred embodiment illustrated, the ramp extension 32 is pivotally mounted to the front wall 24 by means of a hinge 60 in such a way as to enable the ramp extension 32 and the front wall 24 to be located substantially co-planar and co-terminus with one another, to form the ramp 23. It will, of course, be appreciated that the front wall 24 may be telescopic such as to be capable of extending in length and, thereby, the need for the ramp extension 32 may be obviated.

In order to effect extension and retraction of both the ramp extension 32 and the ramp 23 itself, the trailer 10 includes a loading drive means in the form of an extension ram 34. The extension ram 34 is again preferably hydraulically actuated in order to enable same to be operated from a hydraulic circuit remote form the trailer 10. In the present embodiment, the extension ram 34 is engaged at one end to a bracket 52 projecting forwardly of the top chassis 14, and at the other end to a coupling 58 connected to the ramp extension 32. It will of course be appreciated that, in the absence of the ramp extension 32, the extension ram 34 could be adapted and dimensioned to engage between the bracket 52 and the front wall 24.

The extension ram 34 is, as stated above, hydraulically actuated, although any other conventional means capable of performing a similar function is also envisaged by the present invention. If desired, the rate of ascent and descent of the ramp 23 may be controlled using a hydraulic restrictor valve (not shown) in operative association with the extension ram 34.

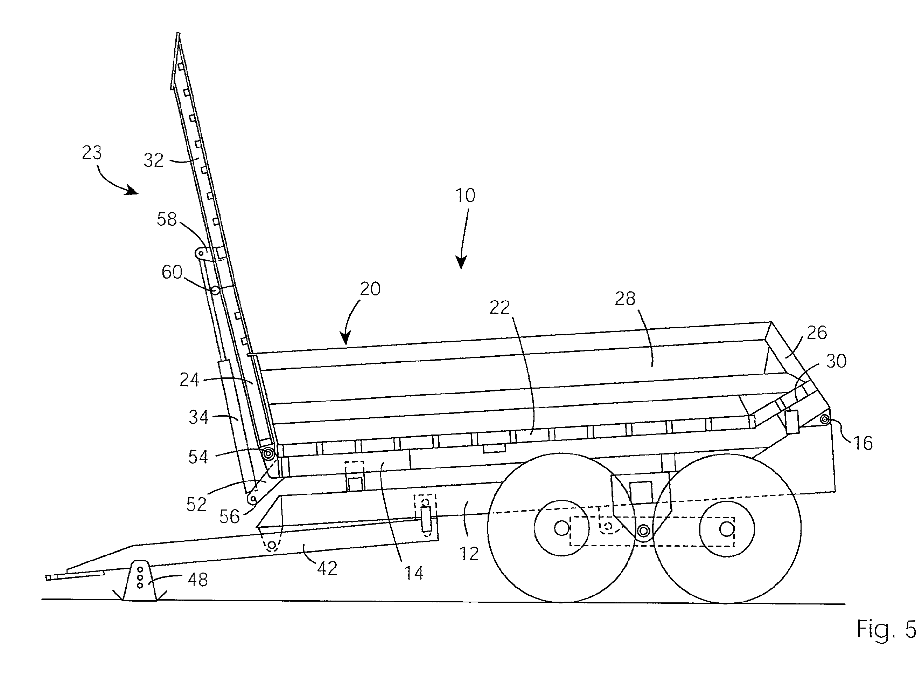

In order to deploy the ramp 23, and referring in particular to Figures 5 and 7, the extension ram 34 is initially extended in order to pivot the ramp extension 32 upwardly about the hinge 60, such as to lie substantially co-terminus and co-planar with the front wall 24. During said extension, the front wall 24 is locked in position against the container 20, as will be described in greater detail hereinafter. The front wall 24 is then released from against the container 20, and the extension ram 34 retracted such that the entire ramp 23 pivots downwardly about the ramp axis 54, into the position shown in Figure 7. To retract the ramp 23, the above process is simply reversed.

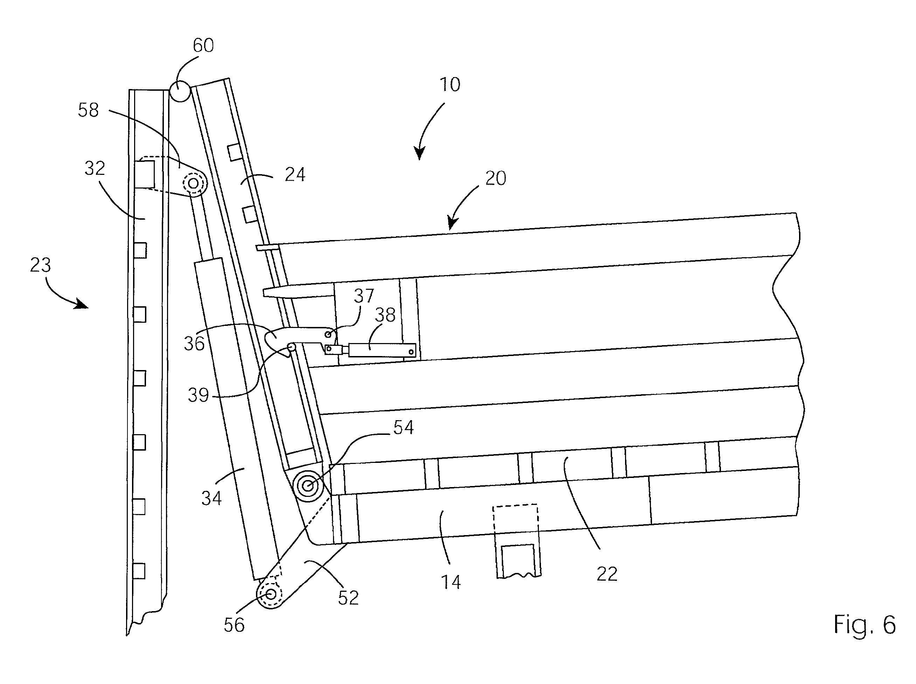

As hereinbefore described, the front wall 24 may be locked in position against the container 20. In order to effect this locking action, the trailer 10 comprises a latch 36 adapted and arranged to hold the front wall 24 against the container 20 during transport, as well as during the initial extension of the ramp 23. For the purposes of clarity, the latch 36 is only illustrated in Figure 6. The latch 36 is operatively associated with a latch opening means in the form of an actuator ram 38. The latch 36 is pivotally mounted to the container 20 about a latch axis 37 such that extension of the actuator ram 38 raises the latch 36 out of engagement with a pin 39 connected to the front wall 24. Release of the latch 36 in this manner allows pivotal movement of the front wall 24 relative to the top chassis 14, under the influence of the extension ram 34. Locking of the latch 36 may be effected by either using a double acting actuator ram 38 or, alternatively, by using a single acting actuator ram 38 with a resilient spring (not shown) arranged thereagainst. Of course it is also clear that any other type of mechanical, electrical, magnetic, etc. arrangement could easily be employed to perform the function of the latch 36 and pin 39.

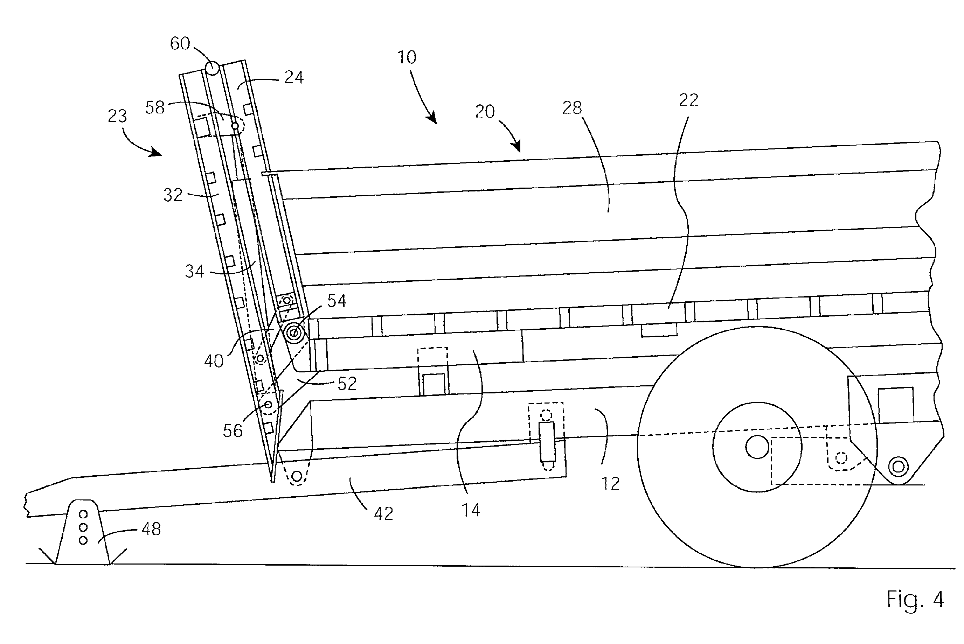

The trailer 10 additionally includes a lock 40 which, for the purposes of clarity, is only illustrated in Figure 4. The lock 40 can be in the form of a simple steel bar or chain adapted and arranged to secure the ramp extension 32 against the front wall 24 during transport. Again any other suitable means which is capable of performing a like function may be substituted for the lock 40.

The trailer 10 of the present invention is thus operated in the following manner.

When the trailer 10 is to be used in it's tipping capacity for transporting and unloading granular material or the like, the front wall 24 and the ramp extension 32 are locked in the transport position using the latch 36 and the lock 40. The latch 36 and the lock 40 allow the trailer 10 to be used this manner, without the front wall 24 and/or the ramp extension 32 hindering the operation thereof. This can be clearly seen in Figure 2 of the accompanying drawings.

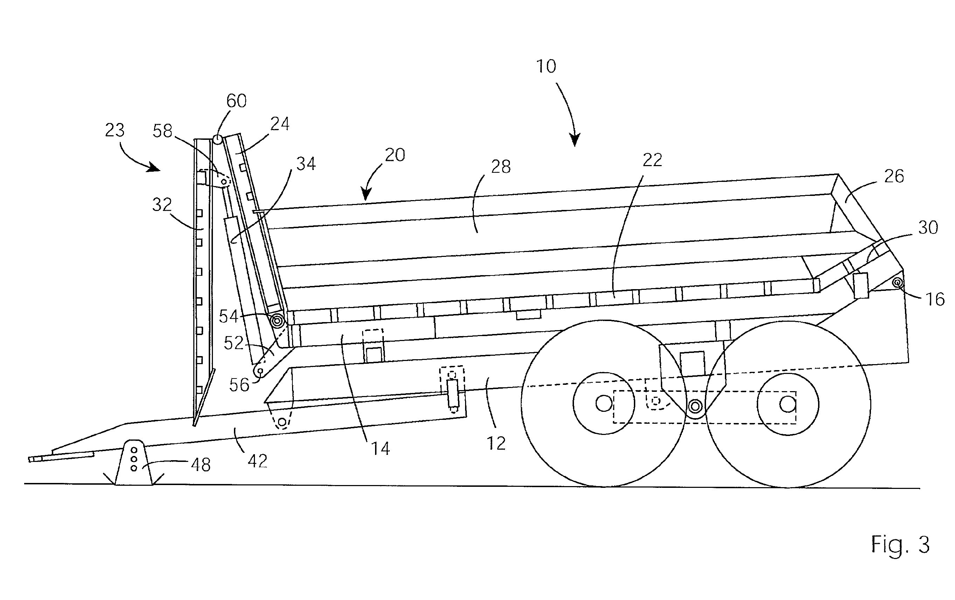

When the trailer 10 is to be used for loading a piece of equipment, the trailer 10 is initially uncoupled from the vehicle 13, and then lowered such as to be supported by a foot 48 projecting from the underside of the draw bar 42. The lock 40 is then released, manually or otherwise, and the ramp extension 32 allowed to swing, under gravity, outwards from the front wall 24, as illustrated in Figure 3. As shown in Figure 5 of the drawings, the ramp extension 32 is then raised, under the influence of the extension ram 34, to an upright position in which the ramp extension 32 is substantially co-planar and co-terminus with the front wall 24. The latch 36 is then released by means of the actuator ram 38, thereby allowing the ramp 23 to drop into the loading position illustrated in Figure 7 of the accompanying drawings. If desired, the rate of descent and ascent may be controlled using a hydraulic restrictor valve (not shown) in operative association with the extension ram 34.

Once the equipment has been loaded onto the trailer 10, via the ramp 23, the procedure may then be reversed, by moving the ramp extension 32 and the front wall 24 into the transport position illustrated in Figure 1 of the accompanying drawings. The front wall 24 is then pressed into engagement against the container 20, either manually or by means of the extension ram 34, so as to engage the latch 36 about the pin 39. An operator then presses the ramp extension 32 into engagement with the front wall 24 and engages the lock 40 thereto.

It will be appreciated that the ramp 23 may be split into two or more adjacent portions (not shown), whereby each portion could be lowered and raised independently of each other. Such an arrangement would therefore allow equipment or the like to be loaded onto the trailer 10 on uneven terrain.

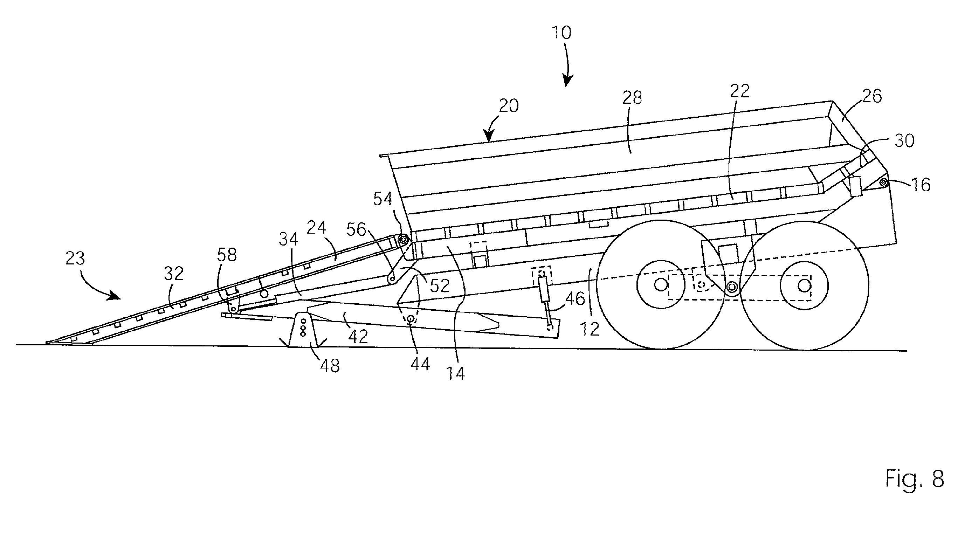

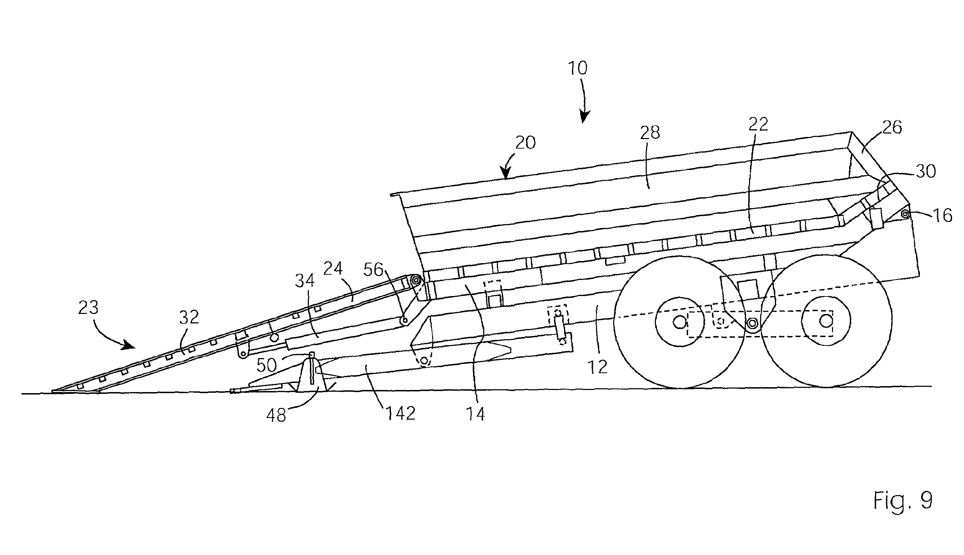

Figures 8 and 9 of the accompanying drawings illustrate a preferred arrangement, in which the trailer 10 is adapted and arranged to urge the bottom chassis 12 towards the ground such as to reduce the relative angular orientation between the ramp 23 and the base 22 of the container 20, when the ramp 23 is lowered for loading or unloading. In the Figure 8 embodiment, this is achieved by pivoting the draw bar 42 about a point 44 by means of a draw bar hydraulic ram 46. As the draw bar 42 is elevated by the foot 48, extension of the draw bar hydraulic ram 46 causes the point 44 to be drawn downwardly towards the ground, thus drawing the front end of the container 20 downwardly towards the ground, such as to decrease the loading angle, and so make loading of the trailer 10 safer.

In an alternative embodiment as illustrated in Figure 9 of the accompanying drawings, a drop ram 50 is located between an alternative draw bar 142 and the foot 48. Thus the drop ram 50 may be retracted in order to lower the draw bar 142 downwardly towards the ground as illustrated. Again this has the effect of urging the bottom chassis 12 towards the ground, and, thereby, decreasing the loading angle between the base 22 of the container 20 and the ramp 23, thereby easing loading and unloading of the trailer 10.

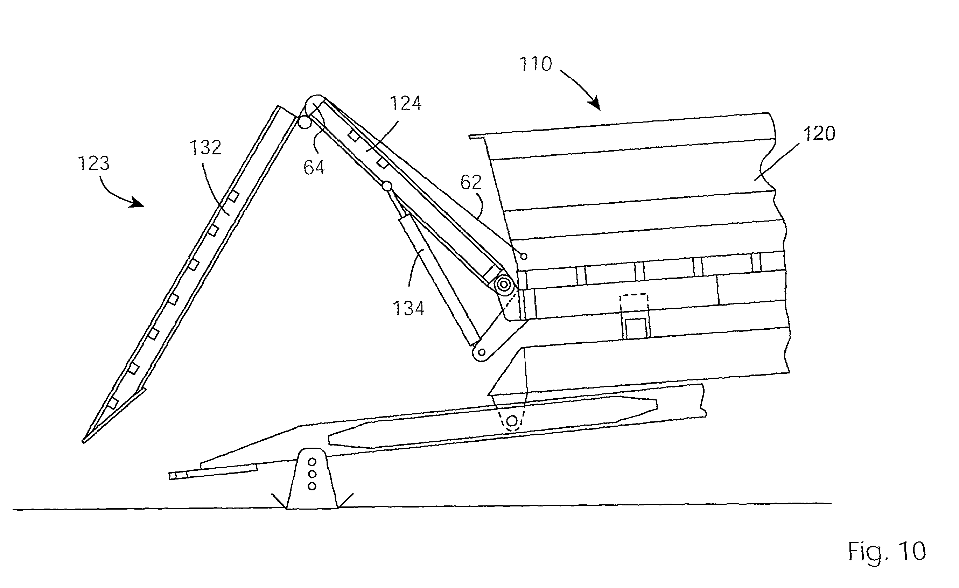

Referring now to Figure 10, there is illustrated a first alternative embodiment of a trailer according to the present invention, generally indicated as 110, in which an alternative means of extending and retracting a ramp 123 is provided. In this first alternative embodiment, like components have been accorded like reference numerals, and unless otherwise stated, perform a like function.

The only difference between the trailer 110 and the trailer 10 of the first embodiment is the mechanism by which a ramp 123 is raised and lowered, which is described in detail hereinafter. The ramp 123 again comprises a front wall 124 and a ramp extension 132 hingedly mounted to the front wall 124. An extension ram 134 is provided for raising and lowering the ramp 123, but unlike with the trailer 10, the extension ram 134 is mounted to the front wall 124 as opposed to the ramp extension 132. There is therefore provided a cable 62, preferably formed from steel braid or the like, which is secured at one end to a container 120, and extends therefrom along the length of the front wall 124, passes over a cable guide 64, and is secured to the ramp extension 132.

In order to lower the ramp 123 from a storage position engaged against the container 120, the extension ram 134 is retracted, thus allowing the front wall 124 to hinge downwardly towards the ground. As this occurs, the cable 62 will be drawn over the cable guide 64, thus drawing the ramp extension upwardly as indicated in the drawing, such as to arrive at a position substantially co-planar and co-terminus with the front wall 124. In order to then raise the ramp 123, the extension ram 134 is simply extended, thereby effecting a reversal of the above sequence. The ramp extension 132 may be secured to the front wall 124, and the front wall 124 to the container 120, as hereinbefore described with reference to the trailer 10 of the first embodiment.

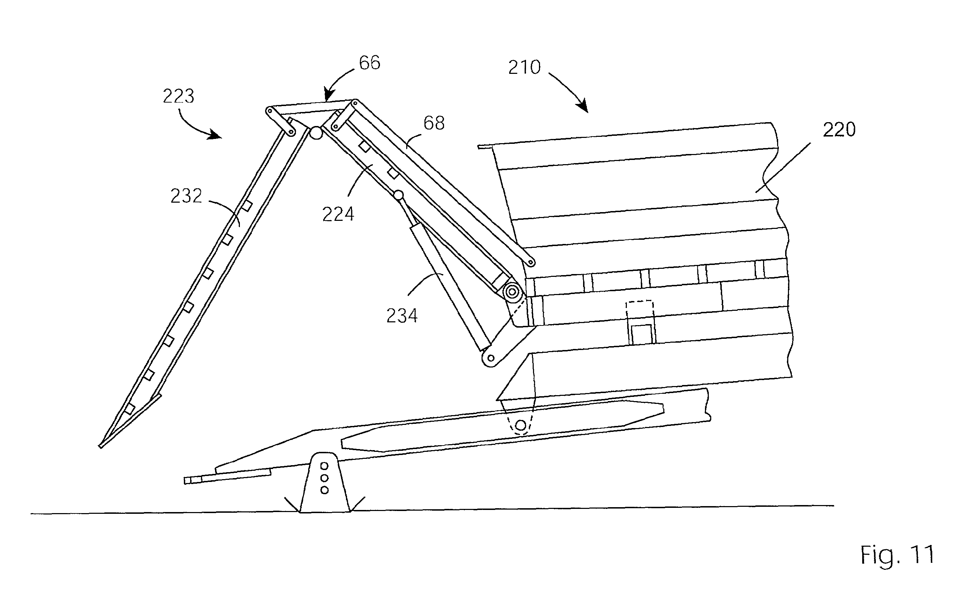

Referring now to Figure 11, there is illustrated a second alternative embodiment of a trailer according to the present invention, generally indicated as 210, in which an alternative means of extending and retracting a ramp 223 is provided. Again, in this second alternative embodiment, like components have been accorded like reference numerals, and unless otherwise stated, perform a like function.

The trailer 210 of the second embodiment includes a ramp 223 whose operation is extremely similar to that of the trailer 110 of the first embodiment, in that an extension ram 234 is connected to a front wall 224, as opposed to a ramp extension 232 which is hingedly mounted to the front wall 224. However, in place of the cable 62 and cable guide 64 provided in the first alternative embodiment, a connecting rod 68 and a linkage 66 have respectively been provided, which carry out a similar function. The connecting rod is secured between a container 220 and the linkage 66, which linkage 66 is connected to both the front wall 224 and the ramp extension 232. As the ramp 223 is lowered from the storage position, the connecting rod 68 acts on the linkage 66, by virtue of the relative movement between the connecting rod 68 and the front wall 224, such that the linkage 66 forces the ramp extension 232 to hinge into location substantially co-planar and co-terminus with the front wall 224. Again, to raise the ramp 223, the extension ram 234 is extended, so reversing the above process.

## Claims

1. A tipping trailer for transport by road or rail, the trailer comprising a base; a container having a floor and walls which define a storage area, the container being mounted to the base and pivotable relative thereto such as to enable unloading of the storage area from a rear end of the container; **characterised in that** at least a portion of one wall of the container is movable between a first position defining, with the other walls, the storage area, and a second position in which the at least a portion of the one wall forms a ramp facilitating access to the storage area.

2. A tipping trailer according to claim 1 in which the ramp is pivotally mounted to the container.

3. A tipping trailer according to claim 1 or 2 in which the ramp, when in the first position, forms a front wall of the container, oppositely disposed to the rear end.

4. A tipping trailer according to any preceding claim in which the length of the ramp may be altered.

5. A tipping trailer according to any preceding claim in which the ramp comprises a first section forming the at least a portion of the wall, and a second section hingedly mounted to the first section, such that when the ramp is in the first position, the first and second sections may be folded against one another, and when the ramp is in the second position, may be disposed substantially co-terminus and co-planar with one another to form the ramp.

6. A tipping trailer according to any preceding claim in which a loading drive means is provided which is operable to move the ramp between the first and second positions.

7. A tipping trailer according to claim 6 in which the loading drive means is coupled to the second section and is operable to both extend and retract the second section relative to the first section, and to move the ramp between the first position and the second position.

8. A tipping trailer according to any preceding claim in which a latch is provided to releasably secure the ramp in the first position.

9. A tipping trailer according to any of claims 5 to 8 in which a lock is provided to releasably secure the first section to the second section.

10. A tipping trailer according to any preceding claim in which the base may be lowered in order to further facilitate access to the storage area with the ramp in the second position.

11. A tipping trailer according to any preceding claim in which the rear end is a scow end.
